# EUROPÄISCHE PATENTANMELDUNG

(11) **EP 2 623 581 A1**
(43) Veröffentlichungstag der Anmeldung: **07.08.2013**
(21) Anmeldenummer: 13153356.4
(22) Anmeldetag: 30.01.2013
(51) Int. Cl.: C10L 11/04, C10L 5/44, C10L 7/00

(54) **Verfahren zum Herstellen einer Anzündhilfe**

(30) Priorität: 01.02.2012 DE 102012201445
(71) Anmelder: Intex Handelsgesellschaft m.b.H., 4600 Wels (AT)
(72) Erfinder: Scheichl, Dieter, 4600 Wels (AT)
(74) Vertreter: Isarpatent

(57) **Zusammenfassung**

Die vorliegende Erfindung schafft ein Verfahren zum Herstellen einer Anzündhilfe (2), mit folgenden Verfahrensschritten: Bereitstellen zumindest eines Holzwolleseils (4); Zerteilen des zumindest einen Holzwolleseils (4) in einzelne Seilabschnitte (10) mittels einer Schneideinrichtung (5); Benetzen einer Mantelfläche (13) und Stirnflächen (14, 15) der einzelnen Seilabschnitte (10) mit einem geschmolzenen Brennstoff; und Abkühlen der einzelnen, mit dem geschmolzenen Brennstoff benetzten Seilabschnitte (10), wobei der Brennstoff erstarrt.

## Beschreibung

Die vorliegende Erfindung betrifft ein Verfahren zum Herstellen einer Anzündhilfe.

Die DE 102 27 750 A1 beschreibt ein Verfahren zum Herstellen einer Anzündhilfe für Festbrennstoffe, wobei ein Holzwolleseil zunächst in ein Tauchbad mit geschmolzenem Parafin abgesenkt wird. Nach dem Benetzen des Holzwolleseils mit Paraffin wird dieses aus dem Tauchbad entnommen und einem Abkühlprozess unterzogen. Nach dem vollständigen Abkühlen und Erstarren des Parafins wird das Holzwolleseil in beliebig viele Seilabschnitte unterteilt, welche die fertigen Anzündhilfen darstellen.

Als nachteilig an diesem Verfahren hat sich allerdings herausgestellt, dass dessen Produktionskapazität durch die erforderliche Abkühlzeit des mit Paraffin getränkten Holzwolleseils maßgeblich begrenzt wird. Um die Produktionskapazität zu erhöhen, kann entweder ein schnell erstarrender und damit teurer Brennstoff, wie beispielsweise ein schnell erstarrendes Wachs oder eine zusätzliche, energieaufwändige Kühlung eingesetzt werden. Ferner entsteht beim Ablängen des benetzten Holzwolleseils mit Paraffinresten getränkte Holzwolle, welche gesondert entsorgt werden muss. Insbesondere weisen die mittels dieses Verfahrens produzierten Anzündhilfen den Nachteil auf, dass die Stirnflächen derselben nicht mit Paraffin benetzt sind und dadurch schlechter anbrennen. Dies gilt es selbstverständlich zu vermeiden.

Die Aufgabe der vorliegenden Erfindung besteht darin, ein Verfahren zum Herstellen einer Anzündhilfe zur Verfügung zu stellen, welches die zuvor beschriebenen Nachteile beseitigt. Diese Aufgabe wird gelöst durch ein Verfahren mit den Merkmalen des Patentanspruchs 1.

Demgemäß ist ein Verfahren zum Herstellen einer Anzündhilfe, mit folgenden Verfahrensschritten vorgesehen: Bereitstellen zumindest eines Holzwolleseils; Zerteilen des zumindest einen Holzwolleseils in einzelne Seilabschnitte mittels einer Schneideinrichtung; Benetzen einer Mantelfläche und Stirnflächen der einzelnen Seilabschnitte mit einem geschmolzenen Brennstoff; und Abkühlen der einzelnen, mit dem geschmolzenen Brennstoff benetzten Seilabschnitte, wobei der Brennstoff erstarrt.

Die der vorliegenden Erfindung zugrunde liegende Idee besteht darin, das zumindest eine Holzwolleseil bereits vor dem Benetzen mit dem geschmolzenen Brennstoff in einzelne Seilabschnitte zu unterteilen und diese einzelnen Seilabschnitte anschließend mit dem geschmolzenen Brennstoff vollständig zu benetzen. Hierdurch kann das Abkühlen der mit dem geschmolzenen Brennstoff benetzten Seilabschnitte unabhängig von dem Zerteilen des zumindest einen Holzwolleseils erfolgen. Das heißt, die Produktionskapazität des Verfahrens ist nicht durch die erforderliche Kühlzeit zum Erstarren des Brennstoffes begrenzt. Insbesondere kann die Kühlzeit beliebig lange gewählt werden, wodurch auf eine zusätzliche Kühleinheit und/oder auf die Anwendung schnell erstarrender und damit teurer Brennstoffe verzichtet werden kann. Ferner weisen die mit dem vorliegenden Verfahren hergestellten Anzündhilfen den Vorteil auf, dass die zusätzlich benetzten Stirnflächen die Anzündhilfen schneller und besser anbrennen lassen und dass durch die gleichmäßige Verteilung des Brennstoffes die Zündhilfen beim Abbrennen weniger tropfen. Die bei dem Herstellungsverfahren anfallenden Abfälle enthalten durch das Zerteilen des zumindest einen Holzwolleseils vor dem Benetzen mit dem geschmolzenen Brennstoff keinen Brennstoff, wodurch als Abfallprodukt einfach entsorgbare reine Holzwolle anfällt.

Aus den Unteransprüchen ergeben sich vorteilhafte Ausgestaltungen und Weiterbildungen der vorliegenden Erfindung.

Gemäß einer bevorzugten Ausführungsform des Verfahrens wird als Brennstoff ein Wachs, ein Paraffin oder dergleichen verwendet. Vorzugsweise ist der Brennstoff als schmelzbarer Festbrennstoff ausgeführt, welcher bei Raumtemperatur in einer festen Form vorliegt. Insbesondere wird als Brennstoff ein langsam erstarrender Brennstoff verwendet. Hierdurch können vorteilhaft langsam erstarrende und damit kostengünstige Brennstoffe eingesetzt werden, wodurch die Kosten zur Herstellung von Anzündhilfen mit dem vorliegenden Verfahren reduziert werden.

Gemäß einer weiteren bevorzugten Ausführungsform des Verfahrens werden bei dem Benetzen der Mantelfläche und der Stirnflächen die einzelnen Seilabschnitte mit dem geschmolzenen Brennstoff zumindest abschnittsweise durchtränkt. Hierdurch ist vorteilhaft eine gleichmäßige Verteilung des geschmolzenen Brennstoffes auf und/oder in den einzelnen Seilabschnitten möglich. Dies führt zu einem besonders gleichmäßigen und tropffreiem Abbrennen der Anzündhilfe. Dies erhöht den Anwendungskomfort bei der Verwendung einer derartigen Anzündhilfe.

Gemäß einer bevorzugten Weiterbildung des Verfahrens wird das Benetzen der Mantelfläche und der Stirnflächen der einzelnen Seilabschnitte in einem Schmelzbad des Brennstoffes durchgeführt. Insbesondere werden die einzelnen Seilabschnitte vollständig in dem Schmelzbad untergetaucht. Hierdurch ist ein einfaches und schnelles Benetzen der einzelnen Seilabschnitte möglich, wodurch die Produktionszeit bei der Herstellung der Anzündhilfen reduziert wird. Dies ermöglicht eine besonders kostengünstige Herstellung der Anzündhilfen.

Gemäß einer weiteren bevorzugten Weiterbildung des Verfahrens werden die einzelnen Seilabschnitte mittels einer Transporteinrichtung vollständig in dem Schmelzbad untergetaucht. Dies ermöglicht vorteilhaft eine Automatisierung des Verfahrens, wodurch deren Produktionskapazität erhöht wird.

Gemäß einer bevorzugten Ausführungsform des Verfahrens wird das zumindest eine Holzwolleseil kontinuierlich bereitgestellt und kontinuierlich zerteilt, wodurch eine besonders hohe Taktrate bei der Herstellung der Anzündhilfen erreicht werden kann. Dies erhöht die Produktionskapazität des Verfahrens und reduziert die Kosten zur Herstellung der Anzündhilfen.

In einer weiteren bevorzugten Ausführungsform des Verfahrens wird das zumindest eine Holzwolleseil mittels einer Klemmeinrichtung bis unmittelbar an die Schneideinrichtung herangeführt, wobei die Klemmeinrichtung das zumindest eine Holzwolleseil beim Zerteilen desselben fixiert. Hierdurch wird zuverlässig ein Auffasern des Holzwolleseils bei dessen Zerteilen verhindert. Hierdurch wird der entstehende Ausschuss reduziert und eine gleichbleibend hohe Qualität der Anzündhilfe erzeugt.

Gemäß einer bevorzugten Ausführungsform des Verfahrens wird eine Vielzahl Holzwolleseile gleichzeitig von der Schneideinrichtung zerteilt, wobei jedem Holzwolleseil eine eigene Schneidklinge zugeordnet wird. Hierdurch wird die Produktionskapazität des Verfahrens erhöht. Dies ermöglicht es, die Produktionskosten zur Herstellung der Anzündhilfen zu reduzieren.

Die Erfindung wird im Folgenden anhand von Ausführungsbeispielen unter Bezugnahme auf die beiliegende schematische Figur näher erläutert.

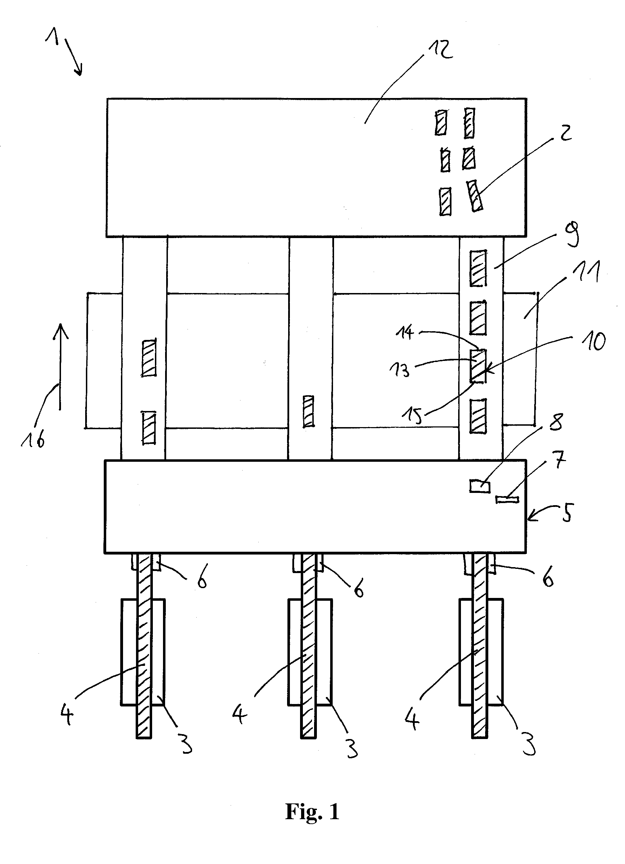

In der Figur bezeichnen gleiche Bezugszeichen gleiche oder funktionsgleiche Komponenten, soweit nichts Gegenteiliges angegeben ist.

Die Figur illustriert eine bevorzugte Ausführungsform einer Vorrichtung 1 zum Durchführen eines Verfahrens zum Herstellen einer Anzündhilfe 2. Die Anzündhilfe 2 ist insbesondere dazu ausgebildet Festbrennstoffe wie beispielsweise Holz oder Kohle zu entzünden.

Die Vorrichtung 1 weist vorzugsweise zumindest eine Zuführeinrichtung 3 zum Zuführen zumindest eines Holzwolleseils 4 zu einer Schneideinrichtung 5 auf. Die Schneideinrichtung 5 weist vorzugsweise eine Klemmeinrichtung 6 auf, welche dazu ausgelegt ist, das zumindest eine Holzwolleseil 4 bis unmittelbar vor die Schneideinrichtung 5, insbesondere bis vor eine Schneidklinge 7 der Schneideinrichtung 5 zu führen und dieses auch während dem Schneiden des zumindest eines Holzwolleseils 4 fest zu klemmen. Die Schneidklinge 7 und deren Gegenmesser 8 sind vorzugsweise mit einer optimierten Schneidengeometrie versehen, welche dazu ausgelegt ist, einen Schnittdruck auf das zumindest eine Holzwolleseil 4 zu reduzieren. Mittels der Schneideinrichtung 5 kann das zumindest eine Holzwolleseil 4 in eine Vielzahl Seilabschnitte 10 zerteilt werden, ohne dass das zumindest eine Holzwolleseil 4 bei dem Zerteilen zerfasert. Vorzugsweise weist die Schneideinrichtung 5 eine Vielzahl Klemmeinrichtungen 6, Schneidklingen 7 und/oder Gegenmesser 8 auf.

In Bezug auf eine Produktionsrichtung der Anzündhilfe 2 nach der Schneideinrichtung 5 ist eine Transporteinrichtung 9 vorgesehen, welche dazu ausgelegt ist, die Seilabschnitte 10 des zumindest einen Holzwolleseils 4 von der Schneideinrichtung 5 zu einem Schmelzbad 11 zu fördern. Das Schmelzbad 11 ist bevorzugt beheizt und mit einem geschmolzenen Brennstoff, wie beispielsweise einem Wachs, einem Parafin, einem tierischen oder pflanzlichen Fett oder dergleichen gefüllt. Der Brennstoff ist vorzugsweise ein Festbrennstoff. Wesentlich bei dem Brennstoff ist, dass dieser ähnlich wie Wachs bei einer relativ niedrigen Temperatur in einen flüssigen Zustand übergeht und bei Raumtemperatur erstarrt. Die Transporteinrichtung 9 ist beispielsweise als Förderband ausgebildet. Die Transporteinrichtung 9 transportiert die einzelnen Seilabschnitte 10 des zumindest einen Holzwolleseils 4 von der Schneideinrichtung 5 in das Schmelzbad 11. Die Transporteinrichtung 9 weist vorzugsweise einen Fördergurt auf, welcher dazu ausgestaltet ist, die einzelnen Seilabschnitte 10 vollständig unter einen Flüssigkeitsspiegel des Schmelzbades 11 zu tauchen. Bevorzugt werden die Seilabschnitte 10 mittels der Transporteinrichtung 10 einzeln in das Schmelzbad 11 getaucht damit die mit dem geschmolzenen Brennstoff benetzten Seilabschnitte 10 nicht miteinander verkleben.

Die Transporteinrichtung 9 durchläuft das Schmelzbad 11 vorzugsweise vollständig und ist dazu ausgelegt, die mit dem geschmolzenen Brennstoff benetzten einzelnen Seilabschnitte 10 einer Kühleinrichtung 12 der Vorrichtung 1 zuzuführen. Die Kühleinrichtung 12 kann beispielsweise als aktive Kühleinrichtung ausgebildet sein. Eine aktive Kühleinrichtung weist bevorzugt eine Kühleinheit auf, welche dazu ausgelegt ist, die einzelnen mit dem Brennstoff benetzten Seilabschnitte 10 auf eine Temperatur unter Raumtemperatur abzukühlen. Alternativ kann die Kühleinrichtung 12 als passive Kühleinrichtung ausgebildet werden, das heißt, es ist keine zusätzliche Kühleinheit vorgesehen und die einzelnen, mit Brennstoff benetzten Seilabschnitte 10 kühlen bei Raumtemperatur ab. Hierdurch kann Kühlenergie eingespart werden.

Ein Verfahren zum Herstellen der Anzündhilfe 2 wird im Folgenden erläutert. Die Produktionsrichtung des Verfahrens ist mittels eines Pfeils 16 angezeigt. Eine fertig produzierte Anzündhilfe 2 weist bevorzugt einen Seilabschnitt 10 sowie erstarrten Brennstoff auf, welcher den Seilabschnitte 10 zumindest abschnittsweise benetzt und/oder zumindest abschnittsweise durchtränkt. Bevorzugt benetzt der Brennstoff den Seilabschnitt 10 vollständig und gleichmäßig. Noch bevorzugter durchtränkt der Brennstoff den Seilabschnitt 10 vollständig und gleichmäßig.

In einem initialen Verfahrensschritt wird das zumindest eine Holzwolleseil 4 bereitgestellt. Insbesondere können gleichzeitig mehrere Holzwolleseile 4, beispielsweise drei Holzwolleseile 4, gleichzeitig bereitgestellt werden. Hierdurch lässt sich die Produktionskapazität erhöhen. Ferner kann die Vorrichtung 1 mehrere Zuführeinrichtungen 3, mehrere Schneideinrichtungen 5, mehrere Transporteinrichtungen 9, mehrere Schmelzbäder 11 und/oder mehrere Kühleinrichtungen 12 aufweisen. Im Folgenden wird zur Vereinfachung auf nur ein Holzwolleseil 4 Bezug genommen.

Das zumindest eine Holzwolleseil 4 wird mittels der Schneideinrichtung 5 in die einzelnen Seilabschnitte 10 zerteilt. Das Holzwolleseil 4 wird bevorzugt kontinuierlich mittels der Zuführeinrichtung 3 bereitgestellt und von der Schneideinrichtung 5 kontinuierlich in eine Vielzahl einzelner Seilabschnitte 10 zerteilt. Vorzugsweise wird das zumindest eine Holzwolleseil 4 auf einer Spule bereitgestellt. Zu dem Zerteilen des zumindest einen Holzwolleseils 4 mittels der Schneideinrichtung 5 wird dieses mittels der Klemmeinrichtung 6 bis unmittelbar an die Schneideinrichtung 5 bzw. die Schneidklinge 7 herangeführt, wobei die Klemmeinrichtung 6 das zumindest eine Holzwolleseil 4 bevorzugt während dem Zerteilen desselben fixiert. Hierdurch wird verhindert, dass sich das zumindest eine Holzwolleseil 4 beim Zerteilen in seine einzelnen Fasern auflöst. Dadurch, dass die Schneidklinge 7 und ihr Gegenmesser 8 mit einer optimierten Klingengeometrie ausgebildet sind, wird zusätzlich der Schnittdruck auf das zumindest eine Holzwolleseil 4 reduziert, wodurch ein Auflösen des zumindest einen Holzwolleseils 4 in seine Fasern zusätzlich verhindert wird. Vorzugsweise weist die Vorrichtung 1 eine Vielzahl Zuführeinrichtungen 3 auf, entsprechend einer Anzahl der zugeführten Holzwolleseile 4.

Nach dem Zerteilen des zumindest einen Holzwolleseils 4, wobei eine Schnittgeschwindigkeit der Schneideinrichtung 5 beliebig groß sein kann, werden die einzelnen Seilabschnitte 10 mittels der Transporteinrichtung 9 dem beheizten Schmelzbad 11 zugeführt. Jeder Seilabschnitt 10 weist insbesondere jeweils eine bevorzugt zylinderförmige Mantelfläche 13 und endseitige Stirnflächen 14, 15 auf. Entsprechend einer Querschnittsgeometrie des verwendeten Holzwolleseils 4 können die Seilabschnitte 10 beispielsweise einen rechteckigen oder ovalen Querschnitt aufweisen. Bei dem Zuführen der Seilabschnitte 10 zu dem Schmelzbad 11 werden diese bevorzugt vollständig in dem sich in dem Schmelzbad 11 befindlichen geschmolzenen Brennstoff untergetaucht. Hierzu ist die Transporteinrichtung 9 dazu ausgelegt, beispielsweise mittels eines sich mit dem Förderband mitbewegenden Förderkorbes, die einzelnen Seilabschnitte 10 vollständig in dem geschmolzenen Brennstoff unterzutauchen. Insbesondere verhindert die Transporteinrichtung 9 ein Aufschwimmen der einzelnen Seilabschnitte 10 auf dem geschmolzenen Brennstoff. Vorzugsweise ist auch die Transporteinrichtung 9 beheizt.

In dem Schmelzbad 11 werden vorzugsweise sowohl die Mantelfläche 13 als auch die Stirnflächen 14, 15 der einzelnen Seilabschnitte 10 vollständig mit dem geschmolzenen Brennstoff benetzt. Insbesondere werden die einzelnen Seilabschnitte 10 in dem Schmelzbad 11 zumindest abschnittsweise mit dem geschmolzenen Brennstoff durchtränkt. In dem Schmelzbad 11 befindet sich vorzugsweise ein Wachs, ein Parafin, ein tierisches oder pflanzliches Fett oder dergleichen. Insbesondere findet als Brennstoff ein kostengünstiger, d.h. langsam erstarrender Brennstoff Anwendung.

Nach dem Benetzen der einzelnen Seilabschnitte 10 mit dem geschmolzenen Brennstoff werden diese mittels der Transporteinrichtung 9 dem Schmelzbad 11 entnommen und der Kühleinrichtung 12 zugeführt. Alternativ kann eine weitere Transporteinrichtung vorgesehen sein, welche dazu ausgelegt ist, die Seilabschnitte 10 aus dem Schmelzbad 11 zu entnehmen. Die Transporteinrichtung 9 kann als Kühleinrichtung ausgebildet sein. Dabei kühlen die Seilabschnitte auf der Transporteinrichtung 9 ab. Die Kühleinrichtung 12 kann ferner beispielsweise als Förderband ausgebildet sein, auf welchem die mit dem geschmolzenen Brennstoff benetzten einzelnen Seilabschnitte 10 bei Raumtemperatur auskühlen. Alternativ können die mit dem Brennstoff benetzten einzelnen Seilabschnitte 10 aktiv mittels einer Kühleinheit gekühlt werden. Bei dem Abkühlen erstarrt der Brennstoff.

Da die Schneideinrichtung 5 in Produktionsrichtung vor dem Schmelzbad 11 angeordnet ist, muss eine Erstarrung des Brennstoffes vor dem Zerteilen des Holzwolleseils 4 nicht abgewartet werden. Hierdurch kann die Schnittgeschwindigkeit der Schneideinrichtung 5 nahezu unbegrenzt schnell eingestellt werden. Dies führt zu einem höheren Produktdurchsatz und damit zu einer kostengünstigeren Produktion der Anzündhilfe 2. Ferner kann nahezu jede beliebige Brennstoffsorte bzw. Wachssorte verwendet werden, insbesondere sind keine schnell erstarrenden und damit teuren Wachssorten erforderlich, da die Abkühlung des geschmolzenen Brennstoffes erst nach dem Zerteilen des zumindest einen Holzwolleseils 4 erfolgt. Hierdurch ergibt sich der Vorteil, dass als Brennstoff beispielsweise ein kostengünstiges Wachs verwendet werden kann. Ferner kann auf eine aktive Abkühlung der fertigen Anzündhilfen 2 mittels einer Kühleinheit verzichtet werden, da zum Zerteilen des Holzwolleseils 4 nicht das Erstarren des geschmolzenen Brennstoffs abgewartet werden muss. Hierdurch wird der Energieverbrauch der Vorrichtung 1 deutlich reduziert. Die Anzündhilfe 2 hat mit der Mantelfläche 13 und den Stirnflächen 14, 15 gegenüber bereits beschriebenen Anzündhilfen eine vergrößerte brennstoffaufnehmende Oberfläche, wodurch der geschmolzene Brennstoff schneller und vor allem gleichmäßiger aufgenommen werden kann. Durch die zusätzliche Oberfläche brennt die Anzündhilfe 2 besser und schneller an und durch die gleichmäßige Verteilung des Brennstoffes auf der Oberfläche tropft die Anzündhilfe 2 beim Abbrennen weniger. Alle gefertigten Anzündhilfen 2 haben durch die gleichmäßige Brennstoffaufnahme bevorzugt einen identischen Brennstoffgehalt. Die bei der Herstellung der Anzündhilfe 2 anfallenden Abfälle enthalten durch das Zerteilen des Holzwolleseils 4 in die Seilabschnitte 10 vor dem Schmelzbad 11 keine Brennstoffanteile. Es fällt als Abfallprodukt reine Holzwolle an. Ferner fällt dadurch, dass kein mit Brennstoff benetztes Holzwolleseil über viele Führungen zum Abkühlen laufen muss weniger Abfall an.

Die aufgeführten Materialien, Zahlenangaben und Dimensionen sind beispielhaft zu verstehen und dienen lediglich der Erläuterung der Ausführungsformen und Weiterbildungen der vorliegenden Erfindung.

### Bezugszeichenliste

- 1: Vorrichtung
- 2: Anzündhilfe
- 3: Zuführeinrichtung
- 4: Holzwolleseil
- 5: Schneideinrichtung
- 6: Klemmeinrichtung
- 7: Schneidklinge
- 8: Gegenmesser
- 9: Transporteinrichtung
- 10: Seilabschnitt
- 11: Schmelzbad
- 12: Kühleinrichtung
- 13: Mantelfläche
- 14: Stirnfläche
- 15: Stirnfläche
- 16: Pfeil

## Patentansprüche

1. Verfahren zum Herstellen einer Anzündhilfe (2), mit folgenden Verfahrensschritten:
Bereitstellen zumindest eines Holzwolleseils (4);
Zerteilen des zumindest einen Holzwolleseils (4) in einzelne Seilabschnitte (10) mittels einer Schneideinrichtung (5);
Benetzen einer Mantelfläche (13) und Stirnflächen (14, 15) der einzelnen Seilabschnitte (10) mit einem geschmolzenen Brennstoff; und
Abkühlen der einzelnen, mit dem geschmolzenen Brennstoff benetzten Seilabschnitte (10), wobei der Brennstoff erstarrt.

2. Verfahren nach Anspruch 1, **dadurch gekennzeichnet, dass** als Brennstoff ein Wachs, ein Paraffin oder dergleichen verwendet wird.

3. Verfahren nach Anspruch 1 oder 2, **dadurch gekennzeichnet, dass** als Brennstoff ein langsam erstarrender Brennstoff verwendet wird.

4. Verfahren nach einem der vorhergehenden Ansprüche, **dadurch gekennzeichnet, dass** bei dem Benetzen der Mantelfläche (13) und der Stirnflächen (14, 15) die einzelnen Seilabschnitte (10) mit dem geschmolzenen Brennstoff zumindest abschnittsweise durchtränkt werden.

5. Verfahren nach einem der vorhergehenden Ansprüche, **dadurch gekennzeichnet, dass** das Benetzen der Mantelfläche (13) und der Stirnflächen (14, 15) der einzelnen Seilabschnitte (10) in einem Schmelzbad (11) des Brennstoffes durchgeführt wird.

6. Verfahren nach Anspruch 5, **dadurch gekennzeichnet, dass** die einzelnen Seilabschnitte (10) vollständig in dem Schmelzbad (11) untergetaucht werden.

7. Verfahren nach Anspruch 6, **dadurch gekennzeichnet, dass** die einzelnen Seilabschnitte (10) mittels einer Transporteinrichtung (9) vollständig in dem Schmelzbad (11) untergetaucht werden.

8. Verfahren nach einem der vorhergehenden Ansprüche, **dadurch gekennzeichnet, dass** das zumindest eine Holzwolleseil (4) kontinuierlich bereitgestellt und kontinuierlich zerteilt wird.

9. Verfahren nach einem der vorhergehenden Ansprüche, **dadurch gekennzeichnet, dass** das zumindest eine Holzwolleseil (4) mittels einer Klemmeinrichtung (6) bis unmittelbar an die Schneideinrichtung (5) herangeführt wird, wobei die Klemmeinrichtung (6) das zumindest eine Holzwolleseil (4) beim Zerteilen desselben fixiert.

10. Verfahren nach einem der vorhergehenden Ansprüche, **dadurch gekennzeichnet, dass** eine Vielzahl Holzwolleseile (4) gleichzeitig von der Schneideinrichtung (5) zerteilt wird, wobei jedem Holzwolleseil (4) eine eigene Schneidklinge (7) zugeordnet wird.
